# EUROPEAN PATENT SPECIFICATION

(11) **EP 4 250 025 B1**
(45) Date of publication and mention of the grant of the patent: **02.09.2026**
(21) Application number: 22163180.7
(22) Date of filing: 21.03.2022
(51) Int. Cl.: G05B 19/042

(54) **AUTOMATIC CONFIGURATION OF FIELD DEVICES FOR AN INDUSTRIAL PLANT**
AUTOMATISCHE KONFIGURATION VON FELDGERÄTEN FÜR EINE INDUSTRIELLE ANLAGE
CONFIGURATION AUTOMATIQUE DE DISPOSITIFS DE CHAMP POUR UNE INSTALLATION INDUSTRIELLE

(43) Date of publication of application: 27.09.2023
(73) Proprietor: ABB SCHWEIZ AG, 5400 Baden (CH)
(72) Inventor: WAGENER, Dirk, 31655 Stadthagen (DE); HEEGE, Marcus, 56759 Kaisersesch (DE); WELTE, Christoph, 89233 Neu-Ulm (DE); FAHRENHOLZ, Christian, 87700 Memmingen (DE)
(74) Representative: Maiwald GmbH

(56) References cited:
- EP-A1- 3 929 673
- WO-A1-2015/035024
- US-A1- 2009 292 995

## Description

### FIELD OF THE INVENTION

The invention relates to the configuration of field devices in industrial plants, and in particular to the bulk configuration of many field devices.

### BACKGROUND

Industrial plants for executing industrial processes comprise a plurality of field devices that are connected to a distributed control system, DCS, via a network of the industrial plant. Field devices need to be configured before they can perform their intended function in the industrial plant. WO 2021/249 655 A1 discloses a method to configure a field device based on an OPC UA server of an already configured field device of the same type.

Configuration of a field device is usually performed manually by means of a user interface defined by an Electronic Device Description, EDD, or Device Package, DP, of the field device.

WO 2015/035 024 A1 discloses a computer-implemented method for configuring a plurality of field devices. The method includes defining a configuration template and mapping the configuration template to a plurality of field devices. The defined configuration template is automatically applied to the plurality of field devices.

EP 3 929 673 A1 discloses a field device configuration tool with a user interface that is configured to enable a user of the field device to input a semantic identification for a parameter of a field device. A processing unit is configured to map the semantic identification to the parameter, and to save this mapping in a memory.

US 2009/292 995 A1 discloses a system and method for accessing and configuring field devices in a process control system. A user interface is associated with a field device in a process control system. Based on input provided through the user interface, requests are generated and provided to an emulator, and from there to a communication manager for communication to the field device.

### OBJECTIVE OF THE INVENTION

It is therefore the objective of the invention to at least partially automate the configuration of a field device.

This objective is achieved by a method according to the wording of claim 1. Further advantageous embodiments are detailed in the dependent claims.

### DISCLOSURE OF THE INVENTION

The invention is defined by the appended claims.

The invention provides a computer-implemented method for configuring a field device for use in an industrial plant.

The method starts with creating an instance of a configuration for the field device. This instance defines a set of configuration parameters and stores values of these configuration parameters. In particular, each configuration parameter may be labelled with a name that serves as a "handle" for accessing this configuration parameter. The instance is created from device description information of the field device, and/or from a template configuration, T, stored in association with the field device and/or in association with a type of the field device. In particular, the device description information may comprise an Electronic Device Description, EDD, and/or a Device Package, DP, of the field device.

Values of configuration parameters in the instance are set to default values given by the device description information, and/or to values given by the template T. The main difference between default values given by the device description information on the one hand, and values given by the template T on the other hand, is that default values given by the device description information are provided by the device manufacturer, whereas the parameters of a template are provided by the plant operator. In particular, EDDs and DPs as device description information are industry standards for describing the functionality of field devices. One and the same field device may be used in many types of industrial plants, but the field device will always have the same EDD and/or DP. The field device may be shipped with an EDD and/or DP, but the EDD and/or DP may also be supplied or updated later by the manufacturer of the field device.

By contrast, the values given by the template T are specific to the field device and/or to a type of field device, but also to the industrial plant where it is being used. In particular, a template T may be created by a plant operator who installs a plurality of field devices of the same type, and it may store values of configuration parameters that need to be set to the same value in many field devices. For example, field devices may have an option to either reboot automatically or wait for an operator to press a physical key before rebooting, and this option may need to be set to "reboot automatically" in all field devices in the industrial plant. Also, field devices that handle fresh water from the waterworks may need to know the degree of water hardness, which is common to all field devices in this particular plant.

The device description information, and/or the template T, may already populate many of the configuration parameters of the field device with values. But at least some configuration parameter values are specific to each individual field device. To also populate these configuration parameters with values, and/or to override already set configuration parameters with new values, semantic meanings of configuration parameters in the instance are determined. From a data store, values of configuration parameters stored in association with the to-be-configured field device and semantic meanings are obtained. The association with the to-be-configured field device may, for example, be established via a name or other identifier of the field device that is stored together with the values of configuration parameters and their semantic meanings in the data store.

Each value obtained from the data store is written to a configuration parameter in the instance whose semantic meaning matches the semantic meaning of the value from the data store. The field device is then provisioned with the instance of the configuration.

Names of configuration parameters for field devices are unique identifiers for these configuration parameters, but they are not standardized. Rather, every manufacturer of field devices is free to assign names in any manner he deems fit. For example, a pressure set-point may be named "pset" in one field device, "set-p" in another and "p-set-bar" in a third. The names may even change with later revisions or updates to the field device.

Therefore, when configuration parameters are stored in the data store in association with their names, the operator who inputs the configuration parameters needs to know which field device is in use and on which revision or update level it is. If the operator does not have this information or it is no longer accurate, he may reference the configuration parameters with a wrong name that the to-be-configured field device does not know. The same may happen if the operator mixes up field devices that use different nomenclatures for their configuration parameters when entering values for several different field devices of the same type. The result is that, when the field device is provisioned with the instance of the configuration, a configuration parameter that is set to a particular value in the instance will not be written to the field device. The field device will operate with a different value for that configuration parameter, or even refuse to start if the missing value of the configuration parameter is a value that is required for the startup. This is particularly disadvantageous if the actual provisioning is done as an unattended job, e.g., at nighttime in bulk for many field devices.

By contrast, when configuration parameters are referenced with their semantic meaning such as "pressure set-point" in the data store, the stored values will be written to exactly the configuration variable in the instance whose semantic meaning resolves to the semantic meaning of this value. This eliminates the sources for error mentioned above, causing the automatic configuration of field devices to become more reliable. Moreover, the data store is better readable and interpretable for the plant operator. For example, a table showing the content of the data store may be sorted by the column "semantic meaning", and all values that relate to the semantic meaning "pressure set-point" will show up in one block. Sorting by names of configuration parameters would be far less meaningful because even names that ultimately resolve to the same semantic meaning may be scattered all across the alphabet.

In a particularly advantageous embodiment, for one and the same configuration parameter, a value obtained from the template T takes precedence over a default value given by the device description information. As discussed above, the value from the template T is motivated by plant-specific knowledge and may therefore be more appropriate than a default value that is fixed without having regard to the concrete industrial plant in which the field device will be used.

Likewise, in a further particularly advantageous embodiment, for one and the same configuration parameter, a value obtained from the data store takes precedence over a default value given by the device description information, and/or over a value obtained from the template T. A value that has been fixed with the purpose of this one particular field device in mind is more likely to be appropriate than a value that has been fixed based on only generic knowledge about the industrial plant, or even without such knowledge.

In a further particularly advantageous embodiment, the determining of the semantic meaning comprises obtaining the semantic meaning from a library where it is stored in association with the field device and with a name of the configuration parameter. In the example mentioned above, if different field devices name a pressure set-point "pset", "set-p" and "p-set-bar", the library may store the semantic meaning "pressure set-point" in association with each field device and the respective name for the pressure set-point. One way of creating and using such a library is detailed in published co-pending application EP 3 929 673 A1.

In a further particularly advantageous embodiment, multiple field devices that are connected to a network of the industrial plant are provisioned in bulk. That is, one and the same data store may store values of configuration parameters for very many field devices, and the task of fixing the configuration parameters in the data store may be temporally uncoupled from the actual roll-out of the instances of configurations. For example, the roll-out may be performed at nighttime when it is less inconvenient that field devices may be temporarily nonfunctional while their configuration parameters are being updated. For example, updating certain configuration parameters may necessitate a reboot of the field device.

Another reason to perform the roll-out at a later time may be network load. That is, the provisioning of the multiple field devices with instances of configurations may be performed in response to a predetermined condition regarding a load on the network being met. In particular, if there is only limited bandwidth available, the provisioning may be performed at a time where less bandwidth is needed for the normal operation of the industrial plant. Also, the provisioning of different field devices may be scheduled to be performed at different times. If the field devices are connected to a network with a bus topology, this is a shared medium, and provisioning all field devices at the same time may cause congestion on this shared medium. Also, the scheduling may be modified to ensure that not too many field devices in certain sections of the plant are updated and momentarily unresponsive at exactly the same time, so that the section as a whole stays functional at all times.

Exemplary situations where there are bandwidth constraints include situations where the field device is connected to the network by means of a two-wire connection, and/or by means of a radio connection that is limited to a duty cycle of at most 1 %. In particular, if there is a duty cycle limitation, a central management entity sending out instances of configurations to many field devices may exhaust its duty cycle very quickly and is then temporarily unable to send any further commands to field devices.

In a further particularly advantageous embodiment, a user is prompted for input of a value of a configuration parameter that is required for startup of the field device but not provided by any of the device description information, the template T, and the data store. In this manner, inadvertent omissions in the data store may be spotted before the instances of configurations are rolled out to field devices. For example, it may be avoided that a nightly rollout of a configuration with an omission of an important parameter renders the field device nonfunctional all night.

The field device may, in particular, be a device that is in direct physical interaction with an industrial plant, and/or with an industrial process executed on this industrial plant. In particular, the field device may be a sensor device that is to supply at least one measurement value of a physical quantity to a distributed control system, DCS, of the industrial plant, and/or an actor device that is to enact a control command received from the DCS on the plant.

In a particularly advantageous embodiment, the method steps described so far may be performed by an Asset Management System, AMS, of the industrial plant. Such an AMS may keep values of configuration parameters for all field devices on file in offline storage. In particular, the AMS may administer or even host the data store.

In a further advantageous embodiment, the method further comprises executing at least one industrial process on the industrial plant with the participation of the new field device. In this context, the method provides the advantage that the industrial process is more reliable because it is more likely that all field devices in the industrial plant actually run with the intended values of the configuration parameters that are stored in the data store. Also, the risk that the industrial process is interrupted due to important omissions in configurations is reduced.

The method is computer-implemented and can therefore be embodied in software. The invention therefore also provides a computer program according to claim 12.

In particular, process controllers, microcontrollers and other electronic devices that are able to execute machine-readable instructions may be regarded as computers as well. Compute instances comprise virtual machines, containers and any other execution environments in which machine-readable instructions may be executed. The invention also relates to a machine-readable data carrier according to the wording of claim 13. A download product is a product that may be sold in an online shop for immediate fulfillment by download. The invention also provides one or more computers and/or compute instances according to the wording of claim 14.

### DESCRIPTION OF THE FIGURES

In the following, the invention is illustrated using Figures without any intention to limit the scope of the invention. The Figures show:
Figure 1: Exemplary embodiment of the method 100 for configuring a field device 2 for use in an industrial plant 1;
Figure 2: Exemplary setting where the method 100 may be employed.

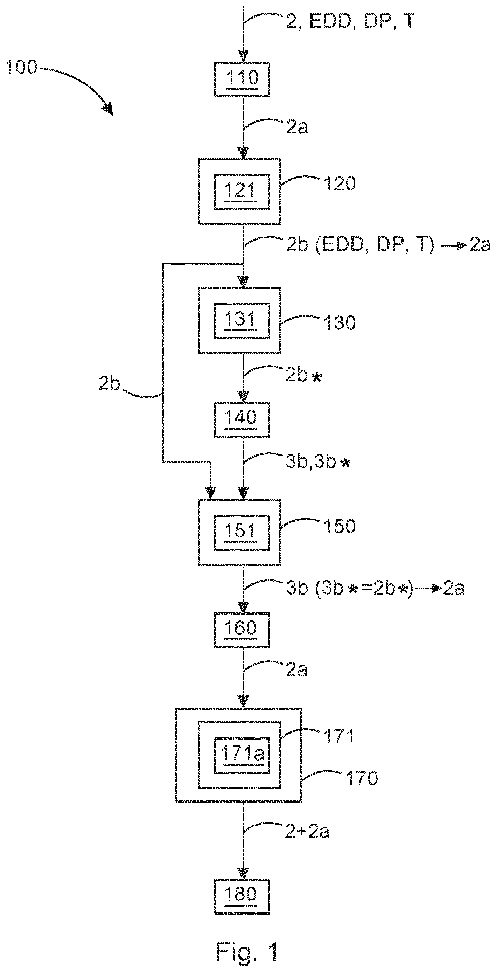

Figure 1 is a schematic flow chart of an embodiment of the method 100 for configuring a field device 2 for use in an industrial plant 1.

In step 110, an instance 2a of a configuration for the field device 2 is created from
- device description information of the field device 2, and/or
- a template configuration, T, stored in association with the field device 2 and/or in association with a type of the field device 2.

In the example shown in Figure 1, the device description information comprises as an Electronic Device Description, EDD, and/or a Device Package, DP, of the field device 2. But the device description information may also come in any other suitable form or format.

In step 120, values of configuration parameters 2b in the instance 2a are set to default values given by the EDD and/or the DP, and/or to values given by the template T. Herein, according to block 121, for one and the same configuration parameter 2b, a value obtained from the template T may take precedence over a default value given by the EDD and/or the DP.

In step 130, semantic meanings 2b* of configuration parameters 2b in the instance 2a are determined. According to block 131, this may comprise obtaining the semantic meaning 2b* from a library where it is stored in association with the field device 2 and with a name of the configuration parameter 2b.

In step 140, values of configuration parameters 3b stored in association with the field device 2 and semantic meanings 3b* are obtained from a data store 3.

In step 150, each value obtained from the data store 3 is written to a configuration parameter 2b in the instance 2a whose semantic meaning 2b* matches the semantic meaning 3b* of the value. Herein, according to block 151, for one and the same configuration parameter 2b, a value obtained from the data store 3 may take precedence over a default value given by the EDD and/or the DP, and/or over a value obtained from the template T.

In the example shown in Figure 1, in step 160, a user is prompted for input of a value of a configuration parameter 2b that is required for startup of the field device 2 but not provided by any of the EDD, the DP, the template T, and the data store 3, so as to avoid inadvertent omissions.

In step 170, the field device 2 is provisioned with the instance 2a of the configuration.

According to block 171, multiple field devices that are connected to a network 1a of the industrial plant 1 may be provisioned in bulk.

According to block 171a, the provisioning of the multiple field devices 2 with instances 2a of configurations is performed in response to a predetermined condition regarding a load on the network 1a being met.

In step 180, at least one industrial process is executed on the industrial plant 1 with the participation of the field device 2.

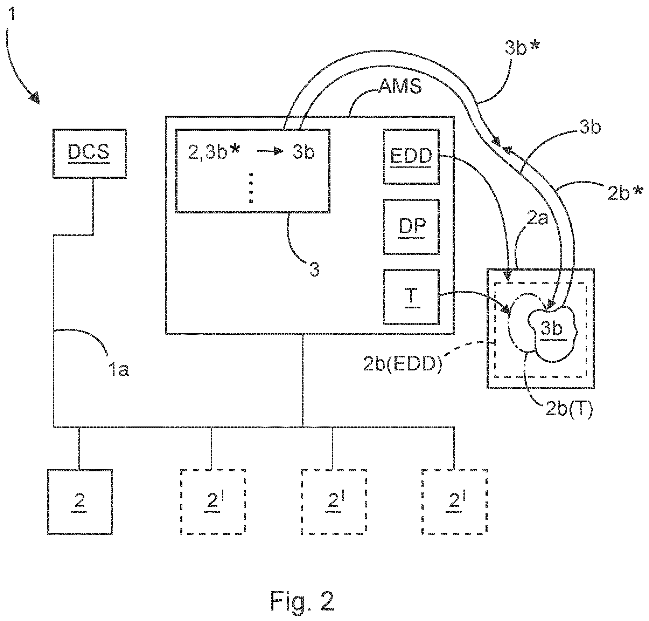

Figure 2 illustrates an exemplary situation where the method 100 may be used. An industrial plant 1 comprises multiple field devices 2, 2'. The field devices 2, 2', a distributed control system, DCS, and an asset management system, AMS, are connected to a network 1a of the industrial plant 1. The AMS houses a data store 3 in which values of configuration parameters 3b are stored in association with field devices 2, 2' and semantic meanings 3b*. The AMS also stores Electronic Device Descriptions, EDD, and/or Device Packages, DP, as device description information for the field devices 2, 2'.

In the situation shown in Figure 2, an instance 2a of a configuration for the field device 2 is created. The values of the configuration parameters 2b in this instance 2a are composed partly of values from the EDD and/or DP, partly of values from the template T, and partly of values from the data store 3. Values from the data store 3 are written to configuration parameters 2b in the instance 2a if the semantic meaning 3b* to which they are bound in the data store 3 matches the semantic meaning 2b* of the configuration parameter 2b in the instance 2a.

### List of reference signs:

- 1: industrial plant
- 2, 2': field devices
- 2a: instance of configuration for field device 2
- 2b: configuration parameters in instance 2a
- 2b*: semantic meanings of configuration parameters 2
- 3: data store
- 3b: configuration parameters in data store 3
- 3b*: semantic meanings of configuration parameters 3b
- 100: method for configuring field device 2
- 110: creating instance 2a
- 120: setting configuration parameters 2b to default values
- 130: determining semantic meanings 2b* of configuration parameters 2b
- 140: obtaining configuration parameters 3b from data store 3
- 150: writing values from data store 3 if semantic meanings 2b*, 3b* match
- 160: prompting user for missing value of configuration parameter 2b
- 170: provisioning field device with instance 2a of configuration
- 171: provisioning multiple field devices 2 in bulk
- 171a: provisioning in response to condition regarding load on network 1a
- 180: executing industrial process on industrial plant 1
- AMS: asset management system
- EDD: electronic device description
- DCS: distributed control system
- DP: device package
- T: template configuration

## Claims

1. A computer-implemented method (100) for configuring a field device (2) for use in an industrial plant (1), comprising the steps of:
• creating (110), from device description information of the field device (2), and from a template configuration, T, stored in association with the field device (2) and/or in association with a type of the field device (2), an instance (2a) of a configuration for the field device (2);
• setting (120) values of configuration parameters (2b) in the instance (2a) to default values given by the device description information, and/or to values given by the template T;
• determining (130) semantic meanings (2b*) of configuration parameters (2b) in the instance (2a), wherein the determining (130) of the semantic meaning (2b*) comprises obtaining (131) the semantic meaning (2b*) from a library where it is stored in association with the field device (2) and with a name of the configuration parameter (2b);
• obtaining (140), from a data store (3), values of configuration parameters (3b) stored in association with the field device (2) and semantic meanings (3b*);
• writing (150) each value obtained from the data store (3) to a configuration parameter (2b) in the instance (2a) whose semantic meaning (2b*) matches the semantic meaning (3b*) of the value, so as to populate configuration parameters that have not yet been set from the template with values, and override already set configuration parameters with new values; and
• provisioning (170) the field device (2) with the instance (2a) of the configuration.

2. The method of claim 1, wherein the device description information comprises an Electronic Device Description, EDD, and/or a Device Package, DP, of the field device (2).

3. The method (100) of any one of claims 1 to 2, wherein, for one and the same configuration parameter (2b), a value obtained from the template T takes precedence (121) over a default value given by the device description information.

4. The method (100) of any one of claims 1 to 3, wherein, for one and the same configuration parameter (2b), a value obtained from the data store (3) takes precedence (151) over a default value given by the device description information, and/or over a value obtained from the template T.

5. The method (100) of any one of claims 1 to 4,
wherein multiple field devices (2) that are connected to a network (1a) of the industrial plant (1) are provisioned (171) in bulk.

6. The method (100) of claim 5, wherein the provisioning of the multiple field devices (2) with instances (2a) of configurations is performed (171a) in response to a predetermined condition regarding a load on the network (1a) being met.

7. The method (100) of any one of claims 1 to 6, further comprising: prompting (160) a user for input of a value of a configuration parameter (2b) that is required for startup of the field device (2) but not provided by any of the device description information, the template T, and the data store (3).

8. The method (100) of any one of claims 1 to 7,
wherein the field device (2) is a device that is in direct physical interaction with an industrial plant, and/or with an industrial process executed on this industrial plant (1).

9. The method (100) of claim 8, wherein the field device (2) is a sensor device that is to supply at least one measurement value of a physical quantity to a distributed control system, DCS, of the industrial plant (1), and/or an actor device that is to enact a control command received from the DCS on the plant (1).

10. The method (100) of any one of claims 1 to 9,
wherein the method steps 110 to 170 are performed by an Asset Management System, AMS, of the industrial plant (1).

11. The method (100) of any one of claims 1 to 10, further comprising executing (180) at least one industrial process on the industrial plant (1) with the participation of the field device (2).

12. A computer program, comprising machine-readable instructions that, when executed on one or more computers and/or compute instances, cause the one more computers and/or compute instances to perform the method (100) of any one of claims 1 to 11.

13. A machine-readable data carrier, and/or a download product, with the computer program of claim 12.

14. One or more computers and/or compute instances with the computer program of claim 12, and/or with the machine-readable data carrier or download product of claim 13.

## Patentansprüche

1. Ein computerimplementiertes Verfahren (100) zum Konfigurieren eines Feldgeräts (2) für den Einsatz in einer Industrieanlage (1), mit den folgenden Schritten:
• Erstellen (110) einer Instanz (2a) einer Konfiguration für das Feldgerät (2) aus Gerätebeschreibungsinformationen des Feldgeräts (2) und aus einer Vorlagenkonfiguration T, die in Verbindung mit dem Feldgerät (2) und/oder in Verbindung mit einem Typ des Feldgeräts (2) gespeichert sind;
• Festlegen (120) von Werten für Konfigurationsparameter (2b) in der Instanz (2a) auf Standardwerte, die durch die Gerätebeschreibungsinformationen vorgegeben sind, und/oder auf Werte, die durch die Vorlage T vorgegeben sind;
• Ermitteln (130) semantischer Bedeutungen (2b*) von Konfigurationsparametern (2b) in der Instanz (2a), wobei das Ermitteln (130) der semantischen Bedeutung (2b*) das Abrufen (131) der semantischen Bedeutung (2b*) aus einer Bibliothek umfasst, in der sie in Verbindung mit dem Feldgerät (2) und mit einem Namen des Konfigurationsparameters (2b) gespeichert ist;
• Abrufen (140) von Werten von Konfigurationsparametern (3b), die in Verbindung mit dem Feldgerät (2) gespeichert sind, sowie von semantischen Bedeutungen (3b*) aus einem Datenspeicher (3);
• das Schreiben (150) jedes aus dem Datenspeicher (3) abgerufenen Werts in einen Konfigurationsparameter (2b) in der Instanz (2a), dessen semantische Bedeutung (2b*) mit der semantischen Bedeutung (3b*) des Werts übereinstimmt, um Konfigurationsparameter, die noch nicht aus der Vorlage gesetzt wurden, mit Werten zu füllen und bereits gesetzte Konfigurationsparameter durch neue Werte zu überschreiben; und
• Bereitstellung (170) der Instanz (2a) der Konfiguration für das Feldgerät (2).

2. Verfahren nach Anspruch 1, wobei die Gerätebeschreibungsinformationen eine elektronische Gerätebeschreibung (EDD) und/oder ein Gerätepaket (DP) des Feldgeräts (2) umfassen.

3. Verfahren (100) nach einem der Ansprüche 1 bis 2, wobei für ein und denselben Konfigurationsparameter (2b) ein aus der Vorlage T entnommener Wert Vorrang (121) vor einem durch die Gerätebeschreibungsinformationen vorgegebenen Standardwert hat.

4. Verfahren (100) nach einem der Ansprüche 1 bis 3, wobei für ein und denselben Konfigurationsparameter (2b) ein aus dem Datenspeicher (3) entnommener Wert Vorrang (151) vor einem durch die Gerätebeschreibungsinformationen vorgegebenen Standardwert und/oder vor einem aus der Vorlage T entnommenen Wert hat.

5. Verfahren (100) nach einem der Ansprüche 1 bis 4, wobei mehrere Feldgeräte (2), die mit einem Netzwerk (1a) der Industrieanlage (1) verbunden sind, in einem Sammelvorgang provisioniert werden (171).

6. Verfahren (100) nach Anspruch 5, wobei die Bereitstellung der mehreren Feldgeräte (2) mit Instanzen (2a) von Konfigurationen als Reaktion auf das Erfüllen einer vorbestimmten Bedingung bezüglich einer Auslastung des Netzwerks (1a) durchgeführt wird (171a).

7. Verfahren (100) nach einem der Ansprüche 1 bis 6, das ferner umfasst:
Auffordern (160) eines Benutzers zur Eingabe eines Werts eines Konfigurationsparameters (2b), der für die Inbetriebnahme des Feldgeräts (2) erforderlich ist, aber weder durch die Gerätebeschreibungsinformationen noch durch die Vorlage T noch durch den Datenspeicher (3) bereitgestellt wird.

8. Verfahren (100) nach einem der Ansprüche 1 bis 7, wobei das Feldgerät (2) ein Gerät ist, das in direkter physikalischer Wechselwirkung mit einer Industrieanlage und/oder mit einem auf dieser Industrieanlage (1) ausgeführten industriellen Prozess steht.

9. Verfahren (100) nach Anspruch 8, wobei das Feldgerät (2) ein Sensorgerät ist, das mindestens einen Messwert einer physikalischen Größe an ein dezentrales Steuerungssystem (DCS) der Industrieanlage (1) liefern soll, und/oder ein Aktorgerät ist, das einen vom DCS empfangenen Steuerbefehl auf der Anlage (1) ausführen soll.

10. Verfahren (100) nach einem der Ansprüche 1 bis 9, wobei die Verfahrensschritte 110 bis 170 von einem Asset-Management-System (AMS) der Industrieanlage (1) ausgeführt werden.

11. Verfahren (100) nach einem der Ansprüche 1 bis 10, das ferner das Ausführen (180) mindestens eines industriellen Prozesses in der Industrieanlage (1) unter Beteiligung des Feldgeräts (2) umfasst.

12. Ein Computerprogramm, das maschinenlesbare Befehle umfasst, die, wenn sie auf einem oder mehreren Computern und/oder Recheninstanzen ausgeführt werden, den einen oder die mehreren Computer und/oder Recheninstanzen dazu veranlassen, das Verfahren (100) nach einem der Ansprüche 1 bis 11 auszuführen.

13. Ein maschinenlesbarer Datenträger und/oder ein Download-Produkt mit dem Computerprogramm nach Anspruch 12.

14. Ein oder mehrere Computer und/oder Recheninstanzen mit dem Computerprogramm nach Anspruch 12 und/oder mit dem maschinenlesbaren Datenträger oder dem Download-Produkt nach Anspruch 13.

## Revendications

1. Procédé (100), mis en œuvre par ordinateur, de configuration d'un dispositif de terrain (2) destiné à être utilisé dans une installation industrielle (1), comprenant les étapes suivantes :
• création (110), à partir d'informations de description de dispositif du dispositif de terrain (2), et à partir d'une configuration de modèle, T, stockée en association avec le dispositif de terrain (2) et/ou en association avec un type du dispositif de terrain (2), d'une instance (2a) d'une configuration pour le dispositif de terrain (2) ;
• définition (120) de valeurs de paramètres de configuration (2b) dans l'instance (2a) à des valeurs par défaut données par les informations de description de dispositif, et/ou à des valeurs données par le modèle T ;
• détermination (130) de significations sémantiques (2b*) de paramètres de configuration (2b) dans l'instance (2a), la détermination (130) de la signification sémantique (2b*) comprenant l'obtention (131) de la signification sémantique (2b*) à partir d'une bibliothèque dans laquelle elle est stockée en association avec le dispositif de terrain (2) et avec un nom du paramètre de configuration (2b) ;
• obtention (140), à partir d'un magasin de données (3), de valeurs de paramètres de configuration (3b) stockées en association avec le dispositif de terrain (2) et des significations sémantiques (3b*) ;
• écriture (150) de chaque valeur obtenue à partir du magasin de données (3) dans un paramètre de configuration (2b) de l'instance (2a) dont la signification sémantique (2b*) correspond à la signification sémantique (3b*) de la valeur, de manière à renseigner avec des valeurs des paramètres de configuration qui n'ont pas encore été définis à partir du modèle, et à remplacer des paramètres de configuration déjà définis par de nouvelles valeurs ; et
• provisionnement (170) du dispositif de terrain (2) avec l'instance (2a) de la configuration.

2. Procédé selon la revendication 1, dans lequel les informations de description de dispositif comprennent une Electronic Device Description, EDD, et/ou un Device Package, DP, du dispositif de terrain (2).

3. Procédé (100) selon l'une quelconque des revendications 1 à 2, dans lequel, pour un seul et même paramètre de configuration (2b), une valeur obtenue à partir du modèle T prévaut (121) sur une valeur par défaut donnée par les informations de description de dispositif.

4. Procédé (100) selon l'une quelconque des revendications 1 à 3, dans lequel, pour un seul et même paramètre de configuration (2b), une valeur obtenue à partir du magasin de données (3) prévaut (151) sur une valeur par défaut donnée par les informations de description de dispositif, et/ou sur une valeur obtenue à partir du modèle T.

5. Procédé (100) selon l'une quelconque des revendications 1 à 4, dans lequel de multiples dispositifs de terrain (2) qui sont connectés à un réseau (1a) de l'installation industrielle (1) sont provisionnés (171) en masse.

6. Procédé (100) selon la revendication 5, dans lequel le provisionnement des multiples dispositifs de terrain (2) avec des instances (2a) de configurations est réalisé (171a) dès lors qu'une condition prédéterminée concernant une charge sur le réseau (1a) est satisfaite.

7. Procédé (100) selon l'une quelconque des revendications 1 à 6, comprenant en outre : la sollicitation (160) d'un utilisateur pour entrer une valeur d'un paramètre de configuration (2b) qui est requise pour le démarrage du dispositif de terrain (2) mais qui n'est fournie par les informations de description de dispositif, le modèle T ni le magasin de données (3).

8. Procédé (100) selon l'une quelconque des revendications 1 à 7, dans lequel le dispositif de terrain (2) est un dispositif qui est en interaction physique directe avec une installation industrielle, et/ou avec un processus industriel exécuté sur cette installation industrielle (1).

9. Procédé (100) selon la revendication 8, dans lequel le dispositif de terrain (2) est un dispositif capteur destiné à fournir au moins une valeur de mesure d'une grandeur physique à un système de contrôle distribué, DCS, de l'installation industrielle (1), et/ou un dispositif exécutant destiné à mettre en œuvre sur l'installation (1) une commande de contrôle reçue du DCS.

10. Procédé (100) selon l'une quelconque des revendications 1 à 9, dans lequel les étapes de procédé 110 à 170 sont réalisées par un système de gestion des actifs, AMS, de l'installation industrielle (1).

11. Procédé (100) selon l'une quelconque des revendications 1 à 10, comprenant en outre l'exécution (180) d'au moins un processus industriel sur l'installation industrielle (1) avec la participation du dispositif de terrain (2).

12. Programme d'ordinateur, comprenant des instructions lisibles par machine qui, lorsqu'elles sont exécutées sur un ou plusieurs ordinateurs et/ou instances de calcul, amènent le ou les ordinateurs et/ou la ou les instances de calcul à réaliser le procédé (100) selon l'une quelconque des revendications 1 à 11.

13. Support de données lisible par machine, et/ou produit de téléchargement, comportant le programme d'ordinateur selon la revendication 12.

14. Un ou plusieurs ordinateurs et/ou une ou plusieurs instances de calcul comportant le programme d'ordinateur selon la revendication 12, et/ou comportant le support de données lisible par machine ou le produit de téléchargement selon la revendication 13.
